(19)

Europäisches
Patentamt
European
Patent Office
Office européen
des brevets

(11) **EP 2 908 524 A1**

(12) **EUROPEAN PATENT APPLICATION**

(43) Date of publication:
**19.08.2015 Bulletin 2015/34**

(21) Application number: **14305200.9**

(22) Date of filing: **14.02.2014**

(51) Int Cl.:
*H04N 19/119* (2014.01)    *H04N 19/187* (2014.01)
*H04N 19/33* (2014.01)    *H04N 19/59* (2014.01)
*H04N 19/176* (2014.01)    *H04N 19/194* (2014.01)
*H04N 19/11* (2014.01)    *H04N 19/593* (2014.01)
*H04N 19/157* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **France Brevets
75009 Paris (FR)**

(72) Inventors:
• **Dhollande, Nicolas
35590 L'HERMITAGE (FR)**

• **Ducloux, Xavier
35200 RENNES (FR)**

(74) Representative: **Nguyen Van Yen, Christian et al
Marks & Clerk France
Conseils en Propriété Industrielle
Immeuble Visium
22, Avenue Aristide Briand
94117 Arcueil Cedex (FR)**

(54)    **An apparatus for encoding an ultra-high definition video sequence**

(57)    An apparatus (200) for the encoding of an original video sequence (201), comprising: a conversion module (202) which converts the original video sequence (201) into a dyadic sub-sampled video sequence (203); a first encoding module (204) providing a first partition (208) of the images of the dyadic sub-sampled video sequence (203), said first partition (208) comprising at least one coding block; a second encoding module (205) for encoding the original video sequence, said module determining a second partition (211) of the images of the original video sequence (201), the second partition (211) being derived from a third partition (210) corresponding to the first partition (208) which is adjusted (209) to the resolution of the original video sequence (201).

FIG.2

EP 2 908 524 A1

**Description**

This invention relates to a method, a system and a computer program for encoding an ultra-high definition video sequence and is particularly, but not exclusively, applicable to video and image processing.

The High Efficiency Video Coding (HEVC) international video standard which has been released in January 2013 brings a significant performance improvement in term of bit rate reduction compared to H.264/AVC. HEVC enables efficient transmission and storage of content resolutions up to 8192x4320 at 120 Hz. This performance gain is achieved by the introduction of new coding tools such as a quad-tree based block size structure and extra prediction modes which in turn require more computing resources.

HEVC encoding is two to ten times more complex than H.264/AVC encoding. In addition, the ultra-high definition (UHD) formats such as UHD-1 (3840x2160) requires the processing of additional texture information compared to the high definition (HD) case. Therefore, optimizations are unavoidable for achieving competitive real-time HEVC encoding of ultra-high definition content.

The determination of the coding modes requires a large amount of processing resources for both AVC/H.264 and HEVC. Several technical solutions have been proposed to address this problem. As an example, in the article written by Ryeong-hee Gweon and Yung-Lyul Lee called Early termination of CU encoding to reduce HEVC complexity in IEICE Transactions on Fundamentals of Electronics, Communications and Computer Sciences, 2012, vol. E95.A, pp. 1215-1218, a method for early terminating the coding unit (CU) partition is described.

The reduction of the encoding time is strongly dependent on the quantization level and motion activity. Only cases of strong quantization level and low motion activity lead to frequent early termination of the decision process and dramatically reduce complexity.

In the article written by Muhammad Usman Karim Khan, Muhammad Shafique, Mateus Grellert, and Jorg Henkel called "Hardware-software collaborative complexity reduction scheme for the emerging HEVC intra encoder", Design, Automation Test in Europe Conference Exhibition (DATE), 2013, 2013, pp. 125-128, a method which implements an a priori Prediction Unit (PU) size selection based on the variance of the block is described. Most probable modes (MPM) for Intra prediction are selected according to the gradient orientations. However, this technique is very sensitive to the choice of parameters (such as thresholds) which may significantly impact the performance.

Therefore, several methods belonging to the state of the art succeed in reducing the complexity of the encoder while maintaining an acceptable Rate-Distortion ratio (RD ratio). The major concern of these approaches is their inefficiency when processing video sequences with very high definition such as ultra-high definition (UHD) video sequences. It would be desirable to address the above issues, to develop an inexpensive solution for reducing the complexity of the encoder while maintaining an acceptable RD ratio when processing video sequences with very high definition.

According to the invention, there is provided an apparatus for the encoding of an original video sequence, comprising:

- a conversion module which converts the original video sequence into a dyadic sub-sampled video sequence;
- a first encoding module providing a first partition of the images of the dyadic sub-sampled video sequence, said first partition comprising at least one coding block;
- a second encoding module for encoding the original video sequence, said module determining a second partition of the images of the original video sequence, the second partition being derived from a third partition corresponding to the first partition which is adjusted to the resolution of the original video sequence.

More generally, the invention is also applicable using a sub-sampled video sequence (dyadic or not dyadic) which is taken as the converted version of the original video sequence processed by the first encoder. Even if the invention is described hereafter with the use of the expression "dyadic sub-sampled video sequence", the skilled person will be able to understand and to implement the invention with a wider breath (i.e. considering a sub-sampled video sequence which is dyadic or not dyadic).

In further aspects of the invention, the original video sequence is an ultra-high definition video sequence and the dyadic sub-sampled video sequence is a high definition video sequence.

In further aspects of the invention, the first and second modules are adapted for HEVC encoding, a coding block corresponding to a HEVC coding unit.

In further aspects of the invention, the conversion module comprises a multi-phase filter which converts the original video sequence into a dyadic sub-sampled video sequence.

In further aspects of the invention, the first partition comprises at least a luminance coding block or a luminance coding block and two chroma coding blocks.

In further aspects of the invention, the first encoding module uses coding tree units whose maximum size is equal to 32*32 pixels, and the second encoding unit uses a coding tree whose maximum size is equal to 64*64 pixels.

In further aspects of the invention, the second encoding module implements a recursive quadtree partitioning in order to determine the second partition, said sub-tree partitioning being applied to the coding blocks of the third partition.

In further aspects of the invention, a sub-tree which belongs to the third partition comprises:

- a root corresponding to a coding unit of said third partition;
- all the nodes under this root.

In further aspects of the invention, a sub-tree which belongs to the third partition comprises:

- a root corresponding to a coding unit of said third partition;
- the four child nodes of this root.

In further aspects of the invention, the second partition is identical to the third partition.

In further aspects of the invention, the first encoding module determines at least one prediction unit, said prediction unit being adjusted to the resolution of the ultra-high definition video sequence and used by the second encoding module for encoding the ultra-high definition video sequence.

In further aspects of the invention, intra-prediction modes are identified by the first encoding module on the luminance samples for each of the prediction units, said encoding modes being transmitted to the second encoding module and imposed for encoding the ultra-high definition video sequence.

In further aspects of the invention, the intra-prediction modes identified for the chrominance samples by the first encoding module for each prediction are transmitted to the second encoding module and imposed for encoding the ultra-high definition video sequence.

In further aspects of the invention, the second encoding module determines for each prediction unit a restricted list of prediction candidates comprising an intra prediction mode Hpred identified by the first encoding module and at least one additional candidate.

In further aspects of the invention, the restricted list of candidates comprises, if HDpred corresponds to an angular mode: the luma prediction mode HDpred, the two HEVC angular modes adjacent to Hdpred, the DC prediction mode and the planar prediction mode.

In further aspects of the invention, the restricted list of candidates comprises, if HDpred corresponds to the DC mode: the luma prediction mode HDpred and the planar prediction mode.

In further aspects of the invention, the restricted list of candidates comprises, if HDpred corresponds neither to an angular prediction mode nor to the DC prediction mode: the luma prediction mode HDpred and the DC prediction mode.

According to the invention, there is also provided a method for the encoding of an original video sequence, comprising the steps of :

- converting the original video sequence into a dyadic sub-sampled video sequence;
- providing a first partition of the images of the dyadic sub-sampled video sequence, said first partition comprising at least one coding block;
- determining a second partition of the images of the original video sequence, the second partition being derived from a third partition corresponding to the first partition which is adjusted to the resolution of the original video sequence.

According to the invention, there is also provided a computer program product, stored on a computer readable medium comprising code means for causing a computer to implement the aforementioned method.

A better understanding of the embodiments of the present invention can be obtained from the following detailed description in conjunction with the following drawings, in which :

- Figure 1 shows the three kinds of elementary units which are used in HEVC;
- Figure 2 illustrates an apparatus for HEVC encoding of an ultra-high definition video sequence;
- Figure 3 gives an example of quadtree based on a 64*64 pixel coding tree unit;
- Figure 4 provides the encoding time performance and the Bjøntegaard Delta PSNR (*BD-PSNR*) which can be achieved with different embodiments of the invention;
- Figure 5 illustrates a technique which can be applied by the second encoding module to construct a restricted set of candidates which includes the intra-prediction mode identified by a first encoding module and to choose the best mode from this set;

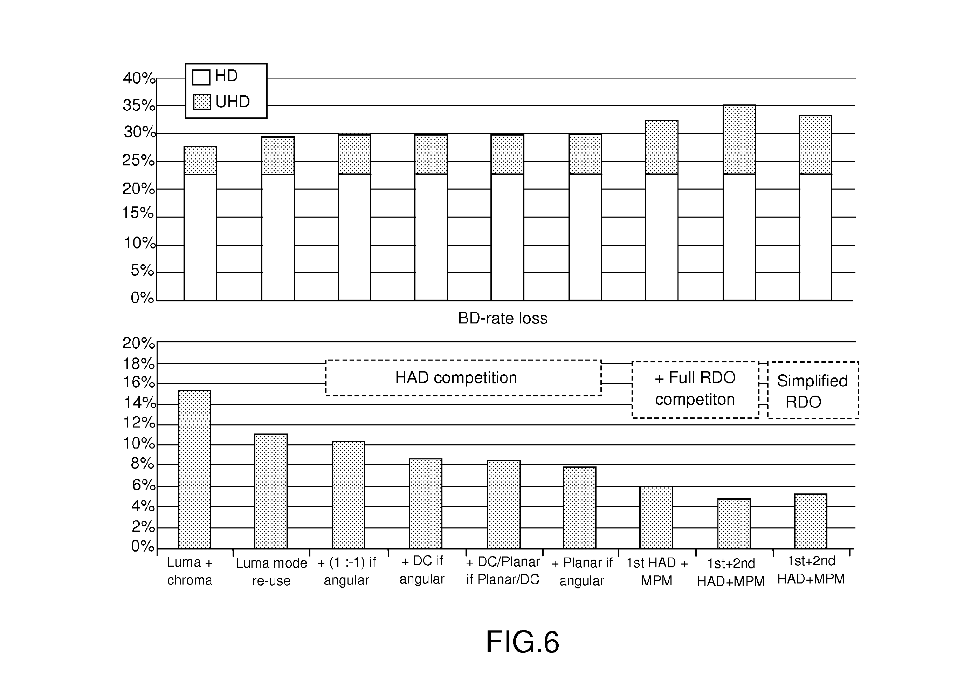

- Figure 6 provides an indication of the encoding time performance and the Bjøntegaard Delta PSNR (B*D-PSNR*) which can be achieved with other embodiments of the invention.

The method and apparatus according to the invention are based on the use of a partition comprising at least one coding block which is determined by a first encoder. This first encoder processes a dyadic sub-sampled video sequence which is a converted version of an original video sequence using a dyadic ratio in both horizontal and vertical sizes. A dyadic ratio is a rational number whose denominator is a power of two.

More generally, the invention is also applicable using a sub-sampled video sequence (dyadic or not dyadic) which is taken as the converted version of the original video sequence processed by the first encoder.

The original video sequence is then encoded by a second encoder taking into account the partition determined by the first encoding module.

The invention is described below with the example of an ultra-high definition video sequence and a high definition sequence which play respectively the roles of the original video sequence and of the dyadic sub-sampled video sequence. Nevertheless, the invention is applicable to any format.

Ultra high definition (UHD) digital video formats include 4K UHD (2160 pixels) and 8K UHD (4320 pixels). High definition (HD) digital video formats generally refer to any video image with more than seven hundred horizontal lines.

In a preferred embodiment, the invention is applied to HEVC encoding and the examples given hereafter are applicable to HEVC. However, the skilled person would easily understand that this invention is applicable to other video encoding techniques such as VP9 encoding wherein the images of the video sequences to be encoded are split into one or several coding blocks of variable sizes.

The HEVC compression is based on a conventional block based hybrid scheme using intra and inter-prediction, transformation, quantization, and entropy coding. Compared to MPEG-4 and H.264/AVC, a quad-tree structure replaces the former macro-block structure.

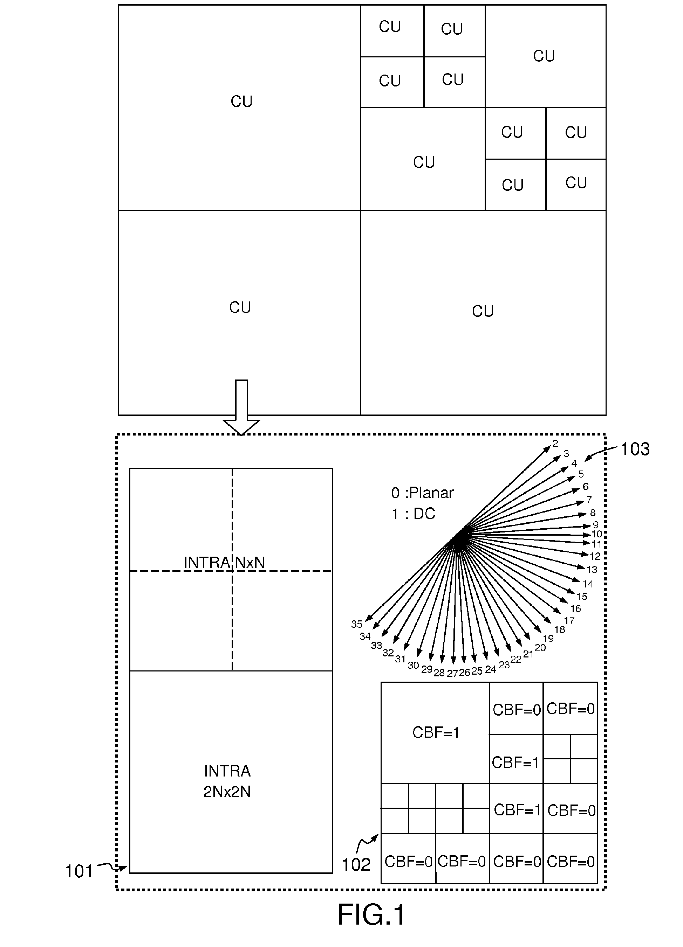

Figure 1 shows the three kinds of elementary units which are used in HEVC, that is: coding units (CU), prediction units (PU) and transform units (TU). For the luminance component, a 64x64 size coding unit block 100 can be recursively split into a plurality of smaller size coding units (8x8 being the smallest allowed size). The prediction units are used as the basis for prediction 101. In intra coding modes, a PU has the same size as its associated CU (mode INTRA_2Nx2N), except for the smaller CU size for which the CU can be split into four sub-blocks (mode INTRA_NxN).

For Discrete Cosine Transform (DCT) and quantization, a CU is then split into one or several TU 102 using another quad-tree called Residual Quad-Tree (RQT).

For intra-prediction, thirty-five prediction modes 103 have been specified for luma PU. These patterns include the MPEG-4/AVC DC mode, a new Planar mode and thirty-three directional predictions. With regards to the chroma component, five prediction modes are considered, namely DC mode, Planar mode, Vertical mode, Horizontal mode, and a copy of the luma mode

(DM CHROMA). The encoder selects the best prediction mode using a rate-distortion function which can be expressed as follows :

$$J_M = SSE_M + \lambda_{Q_p} . R_M \qquad\qquad (1)$$

wherein :

SSE$_M$ represents the distortion which corresponds to a sum of the squares of the errors of the reconstructed samples against the originals, resulting from the encoding mode M.

$R_M$ represents the required number of bits after entropy coding with M, and the $Q_p$ dependent Lagrangian multiplier is $\lambda_{Q_p}$.

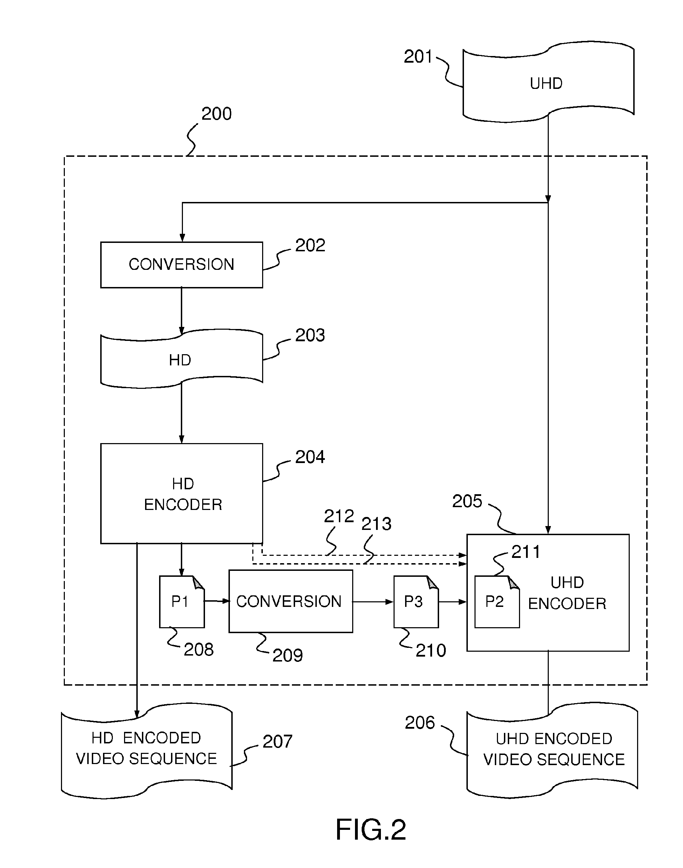

Figure 2 illustrates an apparatus for HEVC encoding of an ultra-high definition video sequence.

One of the aims of this apparatus is to reduce the encoding complexity of ultra-high definition video (UHD) sequences. For that purpose, a first pass of encoding is applied to a video sequence which corresponds to the UHD video sequence with a lowered resolution.

The apparatus 200 comprises a conversion module 202 which converts for example an ultra-high definition video (UHD) sequence 201 into a high definition (HD) video sequence 203.

In one embodiment, the conversion module implements a multi-phase filter which converts the ultra-high definition video sequence into a high definition video sequence. This filter can be chosen as the SHVC multi-phase filter of the HEVC scalable extension which is described in the article written by J. Chen, J. Boyce, Y. Ye, and Miska M. Hannuksela called Scalable HEVC (SHVC) test model 4 (SHM 4), Document of Joint Collaborative Team on Video Coding JCTVC-01007, 2013.

The apparatus comprises a first encoding module 204 which processes the HD video sequence 203 in order to provide a first partition 208 of the images belonging to this video sequence. In this example, HEVC encoding is used and the first partition 203 comprises one or several HEVC coding units.

Optionally, an HEVC encoded HD video sequence 207 can be provided at the output of the apparatus 200.

The apparatus 200 comprises a second encoding module 205. One function of this module is to determine a second partition 211 of the images belonging to the UHD video sequence 201. This second partition 211 is derived from a third partition 210 corresponding to the first partition 208 which has been adjusted 209 to the resolution of the UHD video sequence 201. According to the invention, this means that the second partition 211 can be either identical or deduced from the third partition 210. Several ways of determining the second partition 211 are given by way of example later in this description.

The third partition 210 can be generated from the first partition 208 by the use of a separate module 209 as illustrated on figure 2 which is adapted to adjust the first partition 208 to the resolution of the UHD video sequence 201.

Alternatively, the third partition 210 can be generated by the first encoding module 204 or by the second encoding module 205.

When the second partition 211 is available, the second encoding module 205 is able to encode 206 the UHD video sequence 201.

As noted above, the second partition 211 can be derived from the third partition 210 using different modi operandi.

In one embodiment, the second encoding module 205 implements a recursive quadtree partitioning in order to determine the second partition 211. For that purpose, a sub-tree partitioning processing is applied to the coding blocks (i.e. the HEVC coding units) which belong to the third partition 210.

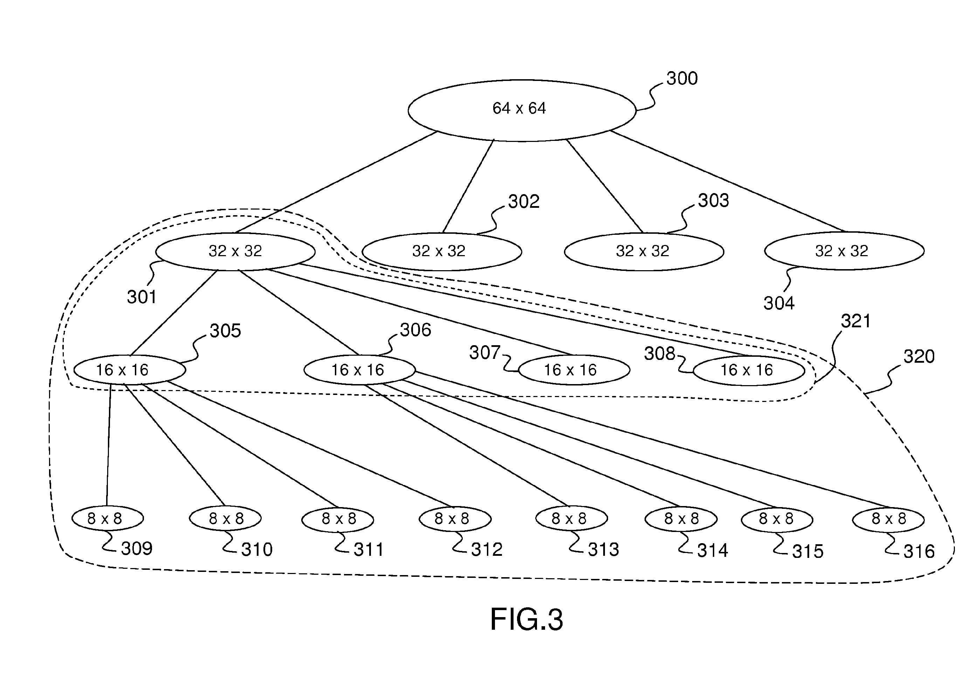

Figure 3 gives an example of a quadtree based on a 64*64 pixel coding tree unit. The root of the whole tree corresponds to node 300. If a coding unit corresponding to a node 301 in the quadtree also belongs to the third partition 210, the recursive quadtree partitioning is applied by the UHD encoder 205 to its associated sub-tree, node 301 being the root of this associated sub-tree.

In one embodiment E1, the associated sub-tree 320 is defined as comprising the root 301 and all the nodes under this root 301. This means that the child nodes 305-308 as well as the grandchild nodes 309-312 and 313-316 belong to the sub-tree 320. In other words, during the recursive quadtree partitioning, the choice of the configuration units is restricted by excluding the configuration units whose sizes are greater than the size of the configuration units which belong to the third partition 210.

In another embodiment E2, an associated sub-tree 321 comprises the root 301 and the four child nodes 305-308 of this root (the grandchild nodes 309-312 and 313-316 do not belong to the sub-tree 321).

In another embodiment E3, the second partition 211 is identical to the third partition 210. This means that the coding units of the second partition 211 are the same coding units than the one of the third partition 210. In this case, a sub-tree comprises only one node (i.e. root 301).

In another embodiment E4, the first encoding module 204 determines at least one prediction unit PU. This PU is adjusted to the resolution of the ultra-high definition video sequence and used by the second encoding module for encoding the ultra-high definition video sequence.

In this case, only the minimum coding unit size is impacted. Indeed, when a 8x8 prediction unit (INTRA_2Nx2N PU mode of a 8x8 coding unit) is selected by the first encoding module 204 and thus belongs to the first partition 208, only the 16x16 prediction unit is calculated in UHD (taking into account the conversion 209). But if four 4x4 prediction units (INTRA_NxN PU mode of a 8x8 coding unit) are chosen, the second encoding module 205 will use four 8x8 prediction units (which correspond to the INTRA_2Nx2N PU mode of the 8x8 coding unit and not the INTRA_NxN PU mode).

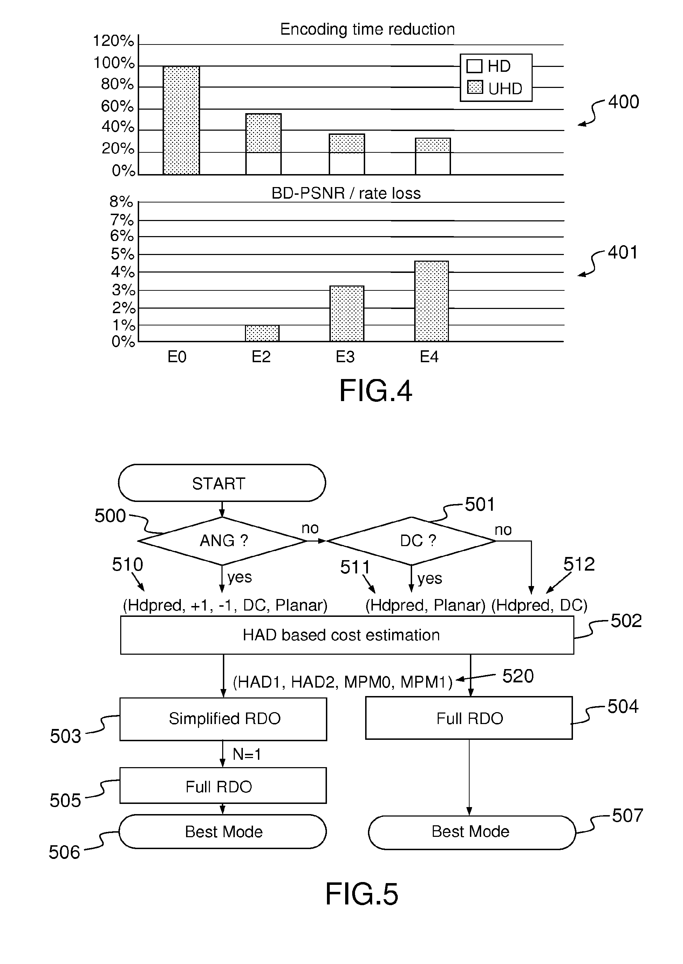

Figure 4 provides the encoding time and the Bjøntegaard Delta PSNR (*BD-PSNR*) which can be achieved with different embodiments E2, E3, E4 of the invention.

Those results have been conducted with the HM11.0 reference model and the Intra only default configuration with the same input quantization parameter which has been used for both HD and UHD encodings. The first graphic 400 represents the encoding time reduction of embodiments E2-E4 compared to a reference E0 corresponding to a single UHD encoder which processes a single UHD video sequence. The second graphic 401 represents the Bjontegaard scores and a positive value indicates a loss of compression efficiency. Figure 4 shows that embodiment E4 reduces significantly the encoding time while introducing an acceptable PSNR drop.

Other embodiments E5 and E6 can also be considered for determining the second partition 211 that will be used for the encoding of the UHD video sequence.

The textures of the HD images and of the UHD images are very similar. Therefore, the prediction mode identified by the first encoding module 204 may be considered as an efficient estimation of the optimal UHD prediction pattern. In another embodiment E5, the intra-prediction modes which have been identified by the first encoding module 204 on the luminance samples for each prediction units are transmitted 212 to the second encoding module and imposed for encoding the ultra-high definition video sequence 201.

Therefore, in the embodiment E5, intra-prediction modes for the luminance samples are identified by the first encoding module 204 for each of the prediction units. These encoding modes are then transmitted 212 to the second encoding module and imposed for encoding the ultra-high definition video sequence 201.

In another embodiment E6, the intra-prediction modes identified by the first encoding module 204 for the chrominance samples for each prediction are transmitted 213 to the second encoding module 205 and imposed for encoding the ultra-high definition video sequence 201.

Figure 5 illustrates a technique which can be applied by the second encoding module to construct a restricted set of candidates which includes the intra prediction mode identified by the first encoding module and to choose the best mode from this set.

In one aspect of the invention, a list of candidates 510, 511 or 512 is constructed. This list always includes the luma prediction mode which has been identified by the first encoding module (HDpred). Then, the list can be constructed for instance as described hereafter.

If 500 HDpred corresponds to an angular mode, the refined candidate list 510 may include:

- the luma prediction mode HDpred which has been identified by the first encoding module;
- the two HEVC angular modes adjacent to Hdpred and comprised between two and thirty-four (noted +1 and -1);
- the DC prediction mode ;
- the planar prediction mode.

If 501 HDpred corresponds to the DC mode, the candidate list 511 may include:

- the luma prediction mode HDpred which has been identified by the first encoding module;

- the planar prediction mode.

If HDpred corresponds neither to an angular prediction mode nor to the DC prediction mode, the candidate list 512 may include:

- the luma prediction mode HDpred which has been identified by the first encoding module;
- the DC prediction mode.

Advantageously, the addition of the DC and Planar modes in the set of prediction modes 510, 511, 512 allows improved performance in terms of Rate-Distortion ratio with a negligible encoding time increase.

Adding the two +1 and -1 candidates as well as the DC prediction mode and the planar prediction mode provides improved performance without adding complexity.

Extending the refined list of candidates to additional adjacent modes, may however affect the final RD score, which demonstrates that an *a priori* based cost estimation can introduce bias in the final encoding. Therefore, it is proposed in one embodiment of this invention to refine the candidate list by selecting only a subset of at least two of the best prediction modes in terms of complexity reduction. For this purpose, a Hadamard based cost estimation is applied 502. Step 502 evaluates the complexity associated with each candidate of the list 510, 511 or 512 using a low complexity measure. For this purpose, the minimization of a Lagrangian $J_{pred}$ can used, $J_{pred}$ being expressed as follows:

$$J_{pred}=SATD_{pred}+\lambda_{pred}.R_{pred} \qquad (2)$$

wherein:

- $SATD_{pred}$ is the absolute sum of Hadamard transformed coefficients of the prediction residual,
- $\lambda_{pred}$ is the Lagrange multiplier,
- $R_{pred}$ represents the number of required bits to encode the prediction syntax without residuals.

Additionally, the HEVC MPM modes (Most Probable Modes) MP0 and MP1 which have already been determined for the left and top causal PU can be added to the candidate list. The computation load is slightly increased but the loss reduction is important.

Then, two alternatives can be considered to select the best mode from the refined set of candidates. In a first alternative, the best prediction mode 507 can be determined from the refined candidate list 520 by calculating directly 504 a full RD cost (Rate to Distortion cost) 603. Alternatively, the best prediction mode 508 can be determined from the refined candidate list 520 by calculating a simplified RD cost 503 before determining a full RD cost 505 with the aim of reducing the computation time.

The methods and apparatus described are merely exemplary and the skilled person would appreciate that a number of alternatives exist to implement aspects of the invention. Embodiments of the invention may be also used in a wide variety of applications and contexts, wherever video sequence encoding may be required. It will also be apparent to the skilled person that various sequences and permutations on the methods and apparatus described are possible within the scope of this invention as disclosed.

**Claims**

1. An apparatus (200) for the encoding of an original video sequence (201), comprising:

   - a conversion module (202) which converts the original video sequence (201) into a dyadic sub-sampled video sequence (203);
   - a first encoding module (204) providing a first partition (208) of the images of the dyadic sub-sampled video sequence (203), said first partition (208) comprising at least one coding block;
   - a second encoding module (205) for encoding the original video sequence, said module determining a second partition (211) of the images of the original video sequence (201), the second partition (211) being derived from a third partition (210) corresponding to the first partition (208) which is adjusted (209) to the resolution of the original video sequence (201).

2. Apparatus according to claim 1, wherein the original video sequence (201) is an ultra-high definition video sequence and the dyadic sub-sampled video sequence (203) is a high definition video sequence.

3. Apparatus according to any of the preceding claims, wherein the first and second modules (204, 205) are adapted for HEVC encoding, a coding block corresponding to a HEVC coding unit.

4. Apparatus according to any of the preceding claims, wherein the conversion module (209) comprises a multi-phase filter which converts the original video sequence into a dyadic sub-sampled video sequence.

5. Apparatus according to any of the preceding claims, wherein the first partition (208) comprises at least a luminance coding block or a luminance coding block and two chroma coding blocks.

6. Apparatus according to claim 3, wherein the first encoding module (204) uses coding tree units whose maximum size is equal to 32*32 pixels, and the second encoding unit uses a coding tree whose maximum size is equal to 64*64 pixels.

7. Apparatus according to any of the preceding claims wherein the second encoding module (205) implements a recursive quadtree partitioning in order to determine the second partition (211), said sub-tree partitioning being applied to the coding blocks of the third partition (210).

8. Apparatus according to claim 7, wherein a sub-tree (320) which belongs to the third partition (210) comprises:

   - a root (301) corresponding to a coding unit of said third partition (210);
   - all the nodes (305-308, 309-316) under this root (301).

9. Apparatus according to claim 7, wherein a sub-tree (321) which belongs to the third partition (210) comprises:

   a. a root (301) corresponding to a coding unit of said third partition (210);
   b. the four child nodes (305-308) of this root (301).

10. Apparatus according to claim 7, wherein the second partition (211) is identical to the third partition (210).

11. Apparatus according to claims 10, wherein the first encoding module (204) determines at least one prediction unit, said prediction unit being adjusted to the resolution of the ultra-high definition video sequence and used by the second encoding module (205) for encoding the ultra-high definition video sequence.

12. Apparatus according to claim 11, wherein intra-prediction modes are identified by the first encoding module (204)

on the luminance samples for each of the prediction units, said encoding modes being transmitted (212) to the second encoding module (205) and imposed for encoding the ultra-high definition video sequence (201).

13. Apparatus according to claim 12, wherein the intra-prediction modes identified for the chrominance samples by the first encoding module (204) for each prediction are transmitted (213) to the second encoding module (205) and imposed for encoding the ultra-high definition video sequence (201).

14. Apparatus according to claim 11, wherein the second encoding module (205) determines for each prediction unit a restricted list of prediction candidates (510, 511, 512) comprising an intra prediction mode Hpred identified by the first encoding module (204) and at least one additional candidate.

15. Apparatus according to claim 14, wherein the restricted list of candidates (510) comprises, if (500) HDpred corresponds to an angular mode: the luma prediction mode HDpred, the two HEVC angular modes adjacent to Hdpred, the DC prediction mode and the planar prediction mode.

16. Apparatus according to claim 14, wherein the restricted list of candidates comprises (511), if (501) HDpred corresponds to the DC mode: the luma prediction mode HDpred and the planar prediction mode.

17. Apparatus according to claim 14, wherein the restricted list of candidates (512) comprises, if (502) HDpred corresponds neither to an angular prediction mode nor to the DC prediction mode: the luma prediction mode HDpred and the DC prediction mode.

18. A method for the encoding of an original video sequence (201), comprising the steps of :

    - converting the original video sequence (201) into a dyadic sub-sampled video sequence (203);
    - providing a first partition (208) of the images of the dyadic sub-sampled video sequence (203), said first partition (208) comprising at least one coding block;
    - determining a second partition of the images of the original video sequence, the second partition (211) being derived from a third partition (210) corresponding to the first partition (208) which is adjusted to the resolution of the original video sequence (201).

19. A computer program product, stored on a computer readable medium comprising code means for causing a computer to implement the method of claim 18.

FIG.1

201 — UHD

200

202 — CONVERSION

203 — HD

204 — HD ENCODER

205

211

212  213

P1 — 208 → CONVERSION — 209 → P3 — 210 → P2 | UHD ENCODER

207 — HD ENCODED VIDEO SEQUENCE

206 — UHD ENCODED VIDEO SEQUENCE

FIG.2

FIG.3

Encoding time reduction

```
120%
100%
 80%
 60%                    ☐ HD
 40%                    ▨ UHD
 20%
  0%
```

⌇ 400

BD-PSNR / rate loss

```
8%
7%
6%
5%
4%
3%
2%
1%
0%
     E0      E2      E3      E4
```

⌇ 401

## FIG.4

START

500 ⌇ ANG ? —no→ 501 ⌇ DC ? —no→

510 ↓ yes          511 ↓ yes          512

(Hdpred, +1, -1, DC, Planar)    (Hdpred, Planar)  (Hdpred, DC)

HAD based cost estimation ⌇ 502

(HAD1, HAD2, MPM0, MPM1) ◀— 520

503 ⌇ Simplified RDO          Full RDO ⌇ 504

↓ N=1

505 ⌇ Full RDO

506 ⌇ Best Mode          Best Mode ⌇ 507

## FIG.5

FIG.6

Europäisches
Patentamt

European
Patent Office

Office européen
des brevets

# EUROPEAN SEARCH REPORT

**Application Number**

EP 14 30 5200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/167712 A1 (MEDIATEK INC [CN]; CHUANG TZU-DER [CN]; CHEN CHING-YEH [CN]; HUANG YU-) 13 December 2012 (2012-12-13) * paragraphs [0001] - [0029]; figures 2,3 * | 1-11,18, 19 | INV. H04N19/119 H04N19/187 H04N19/33 H04N19/59 H04N19/176 H04N19/194 H04N19/11 H04N19/593 H04N19/157 |
| | ----- | | |

**TECHNICAL FIELDS SEARCHED (IPC)**

H04N

~~The present search report has been drawn up for all claims~~

| Place of search | Date of completion of the search | Examiner |
|---|---|---|
| Munich | 12 August 2014 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

**Application Number**

EP 14 30 5200

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11, 18, 19

☐ The present supplementary European search report has been drawn up for those parts of the European patent application which relate to the invention first mentioned in the claims (Rule 164 (1) EPC).

15

Europäisches
Patentamt

European
Patent Office

Office européen
des brevets

**LACK OF UNITY OF INVENTION**
**SHEET B**

Application Number

EP 14 30 5200

The Search Division considers that the present European patent application does not comply with the requirements of unity of invention and relates to several inventions or groups of inventions, namely:

1. claims: 1-11, 18, 19

   Interlayer prediction (BL to EL) of partitionings of the input video sequence. The dependent claims specify the EL recursive quadtree partitioning in accordance with Embodiments 1-4 of the description (i.e., specifying to which extent the resolution adapted CUs of the BL may be changed into further or less sub-CUs).
   ---

2. claims: 12-17

   Interlayer prediction (BL to EL) of partitionings of the input video sequence. Adaption of the EL candidate lists for intra-prediction modes based on what prediction mode was allocated to the corresponding BL PU by, for example, adding the angular prediction mode used in the BL, the two neighbouring modi thereof, the DC mode and the planar mode.
   ---

**ANNEX TO THE EUROPEAN SEARCH REPORT
ON EUROPEAN PATENT APPLICATION NO.**

EP 14 30 5200

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2014

| Patent document cited in search report | | Publication date | Patent family member(s) | | Publication date |
|---|---|---|---|---|---|
| WO 2012167712 | A1 | 13-12-2012 | AU | 2012267006 A1 | 17-10-2013 |
| | | | AU | 2012267007 A1 | 17-10-2013 |
| | | | CN | 103518374 A | 15-01-2014 |
| | | | CN | 103597827 A | 19-02-2014 |
| | | | EP | 2719183 A1 | 16-04-2014 |
| | | | EP | 2719184 A1 | 16-04-2014 |
| | | | JP | 2014514833 A | 19-06-2014 |
| | | | KR | 20140005296 A | 14-01-2014 |
| | | | US | 2014072033 A1 | 13-03-2014 |
| | | | US | 2014146891 A1 | 29-05-2014 |
| | | | WO | 2012167712 A1 | 13-12-2012 |
| | | | WO | 2012167713 A1 | 13-12-2012 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RYEONG-HEE GWEON ; YUNG-LYUL LEE.** *Early termination of CU encoding to reduce HEVC complexity in IEICE Transactions on Fundamentals of Electronics, Communications and Computer Sciences,* 2012, vol. E95.A, 1215-1218

- **MUHAMMAD USMAN ; KARIM KHAN ; MUHAMMAD SHAFIQUE ; MATEUS GRELLERT ; JORG HENKEL.** Hardware-software collaborative complexity reduction scheme for the emerging HEVC intra encoder. *Design, Automation Test in Europe Conference Exhibition (DATE),* 2013, vol. 2013, 125-128
- **J. CHEN ; J. BOYCE ; Y. YE ; MISKA M. HANNUK-SELA.** Scalable HEVC (SHVC) test model 4 (SHM 4). *Document of Joint Collaborative Team on Video Coding JCTVC-01007,* 2013